(19) Europäisches Patentamt
European Patent Office
Office européen des brevets

(11) **EP 3 664 484 B1**

(12) **FASCICULE DE BREVET EUROPEEN**

(45) Date de publication et mention de la délivrance du brevet:
**09.08.2023 Bulletin 2023/32**

(21) Numéro de dépôt: **19210799.3**

(22) Date de dépôt: **21.11.2019**

(51) Classification Internationale des Brevets (IPC):
**H02J 7/00** *(2006.01)* **H02J 50/10** *(2016.01)*
**H04W 4/80** *(2018.01)* **H04B 5/00** *(2006.01)*

(52) Classification Coopérative des Brevets (CPC):
**H04W 4/80; H02J 7/00034; H02J 7/0071;**
**H02J 7/007188; H02J 50/10;** H02J 50/80;
H02J 2310/22; H04B 5/0037; H04W 4/029

(54) **PROCÉDÉ D'ACTIVATION DE FONCTIONS, MIS EN OEUVRE DANS UN ÉQUIPEMENT HÔTE INTÉGRANT OU RELIÉ À UN DISPOSITIF DE CHARGE SANS FIL**

FUNKTIONSAKTIVIERUNGSMETHODE, DIE IN DIE INTEGRATION VON HOSTGERÄTEN EINGESETZT ODER MIT EINEM DRAHTLOSEN LADEGERÄT VERBUNDEN IST.

FUNCTIONS ACTIVATION METHOD, IMPLEMENTED IN AN INTEGRATING HOST EQUIPMENT OR AN HOST CONNECTED TO A WIRELESS CHARGING DEVICE.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2018 FR 1872467**

(43) Date de publication de la demande:
**10.06.2020 Bulletin 2020/24**

(73) Titulaire: **SAGEMCOM BROADBAND SAS**
**92500 Rueil-Malmaison (FR)**

(72) Inventeur: **VANKIEKEN, Nicolas**
**92500 Rueil Malmaison (FR)**

(74) Mandataire: **Lavaud, Thomas**
**Cabinet Boettcher**
**5, rue de Vienne**
**75008 Paris (FR)**

(56) Documents cités:
WO-A1-2017/209502        CN-A- 108 110 858
CN-A- 108 600 111         KR-A- 20180 045 703
US-A1- 2017 289 277

• **FAFOUTIS XENOFON ET AL: "Energy Neutral Activity Monitoring: Wearables Powered by Smart Inductive Charging Surfaces", 2016 13TH ANNUAL IEEE INTERNATIONAL CONFERENCE ON SENSING, COMMUNICATION, AND NETWORKING (SECON), IEEE, 27 juin 2016 (2016-06-27), pages 1-9, XP032994006, DOI: 10.1109/SAHCN.2016.7732986**
• **Anonymous: "Best Wireless Chargers of IFA 2018 | Digital Trends", , 1 September 2018 (2018-09-01), XP055805487, Retrieved from the Internet: URL:https://www.digitaltrends.com/mobile/best-wireless-chargers-ifa-2018/ [retrieved on 2021-05-18]**

**Description**

L'invention concerne le domaine des procédés d'activation de fonctions réalisées par un équipement hôte intégrant ou relié à un dispositif de charge sans fil.

ARRIERE PLAN DE L'INVENTION

On connaît aujourd'hui un certain nombre de moyens pour activer ou pour désactiver les fonctions réalisées par une passerelle résidentielle, et notamment la fonction de point d'accès Wi-Fi.

Ainsi, le standard *Wi-Fi Protected Setup* (ou WPS) donne la possibilité à un utilisateur de démarrer l'appairage d'un nouvel équipement mobile à une passerelle résidentielle en appuyant sur un bouton physique ou virtuel de la passerelle résidentielle et de l'équipement mobile.

Certaines passerelles résidentielles permettent aussi, via une interface graphique, de programmer des horaires d'activation (et/ou de désactivation) du Wi-Fi.

Un opérateur télécom ou un administrateur peut aussi activer ou désactiver à distance des fonctions mises en ceuvre par la passerelle résidentielle, et notamment activer ou désactiver le Wi-Fi, en utilisant par exemple le protocole TR-069 (pour *Technical Report* 069) ou le protocole SNMP (pour *Simple Network Management Protocol).*

Le document KR 2018 0045703 A (KIM SO HUI [KR]) daté du 4 mai 2018 divulgue une étagère qui comprend un dispositif de chargement de téléphone portable qui s'allume quand le téléphone est placé en charge et s'éteint quand le téléphone est retiré.

Ces moyens d'activation et de désactivation de fonctions, qui peuvent être utilisés dans tout type d'équipement hôte (passerelle résidentielle, boîtier décodeur, véhicule connecté, etc.) et pour tout type de fonctions, accroissent le confort de l'utilisateur et ses capacités d'interaction avec l'équipement hôte et, plus généralement, avec son environnement.

OBJET DE L'INVENTION

L'invention a pour objet de fournir une nouvelle méthode pour activer ou désactiver des fonctions mises en œuvre par un équipement hôte.

RESUME DE L'INVENTION

L'invention est spécifiée par les revendications annexées.

Le procédé d'activation selon l'invention fournit une méthode particulièrement simple pour activer ou désactiver des fonctions qui sont réalisées non pas par l'équipement mobile mais par l'équipement hôte lui-même.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés, parmi lesquels :

[Fig.1] la figure 1 représente un équipement hôte intégrant un dispositif de charge sans fil, dans lequel est mis en œuvre le procédé d'activation selon l'invention ;
[Fig.2] la figure 2 représente un équipement hôte relié à un dispositif de charge sans fil, dans lequel est mis en œuvre le procédé d'activation selon l'invention ;
[Fig.3] la figure 3 représente des étapes du procédé d'activation selon l'invention ;
[Fig.4] la figure 4 représente une étape préliminaire de programmation de fonctions prédéfinies ;
[Fig.5] la figure 5 représente une étape de détection de présence de l'équipement mobile à partir d'une mesure du courant de charge tiré par le dispositif de charge sans fil;
[Fig.6] la figure 6 est un graphique comprenant une courbe du courant de charge en fonction du temps.

DESCRIPTION DETAILLEE DE L'INVENTION

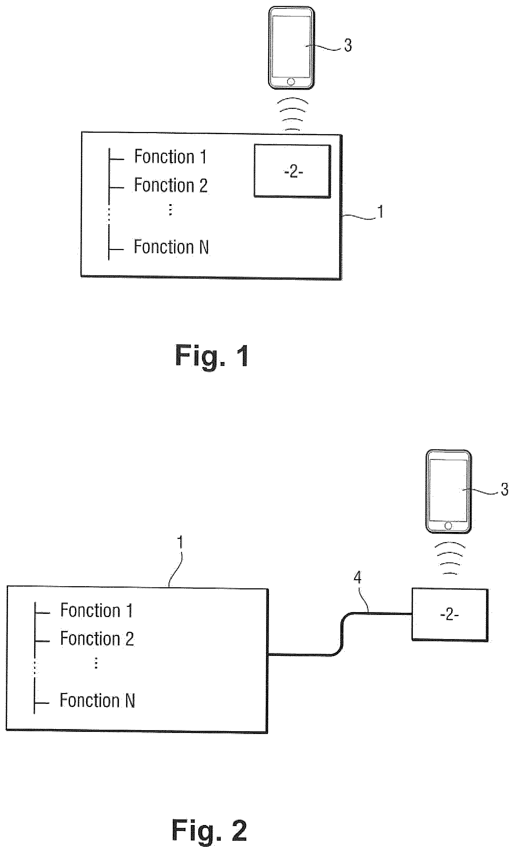

En référence à la figure 1, le procédé d'activation selon l'invention est ici mis en œuvre dans un équipement hôte qui est une passerelle résidentielle 1. Cette passerelle résidentielle 1 est destinée à mettre en oeuvre plusieurs fonctions prédéfinies : fonction 1, fonction 2,..., fonction N. Parmi ces fonctions prédéfinies, on trouve la fonction de point d'accès Wi-Fi.

La passerelle résidentielle 1 comporte un composant de traitement (non représenté). Le composant de traitement est ici un microcontrôleur mais pourrait être un composant différent, par exemple un processeur, un FPGA, un ASIC, etc. Le composant de traitement est adapté à exécuter des instructions d'un programme pour mettre en oeuvre le procédé d'activation selon l'invention.

La passerelle résidentielle 1 intègre ici un dispositif de charge sans fil 2 destiné à recharger des équipements mobiles. Les équipements mobiles comprennent ici des téléphones mobiles 3.

On note, en référence à la figure 2, que le dispositif de charge sans fil 2 pourrait parfaitement ne pas être intégré dans la passerelle résidentielle 1, mais être relié à la passerelle résidentielle 1 par un câble 4.

Le dispositif de charge sans fil 2 comprend une surface d'accueil (ou surface de base de charge). Dès qu'un téléphone mobile compatible charge sans fil 3 est positionné sur la surface d'accueil (ou, tout au moins, que le téléphone mobile 3 est amené à proximité immédiate de la surface d'accueil), la charge du téléphone mobile 3 débute. Le dispositif de charge sans fil 2 tire un courant de charge qui provient du secteur auquel est connectée la passerelle résidentielle 1 pour son alimentation. Le courant de charge est utilisé par le dispositif de charge sans fil 2 pour transmettre de l'énergie au téléphone mobile 3 pour sa recharge. La transmission d'énergie est réalisée sans fil, par induction magnétique.

Le principe du procédé d'activation selon l'invention est le suivant.

Lorsque la passerelle résidentielle 1 détecte que le téléphone mobile 3 vient d'être positionné sur la surface d'accueil du dispositif de charge sans fil 2 pour être rechargé, la passerelle résidentielle 1 active ou désactive une ou plusieurs premières fonctions prédéfinies en plus de la recharge du téléphone mobile 3. Par « en plus de la recharge », on entend que la ou les premières fonctions prédéfinies sont différentes de la recharge du téléphone mobile 3, qui a bien lieu par ailleurs.

Puis, lorsque la passerelle résidentielle 1 détecte que le téléphone mobile 3 vient d'être éloigné de la surface d'accueil, la passerelle résidentielle 1 active ou désactive une ou plusieurs deuxièmes fonctions prédéfinies.

Pour bien comprendre l'invention, on décrit tout d'abord rapidement un mode de réalisation relativement simple de l'invention. Dans ce mode de réalisation, il n'y a qu'une seule première fonction prédéfinie et une seule deuxième fonction prédéfinie. La première fonction prédéfinie et la deuxième fonction prédéfinie sont toutes deux une même fonction de point d'accès à un réseau Wi-Fi. Cette fonction est activée lorsque le téléphone mobile 3 est positionné sur la surface d'accueil du dispositif de charge sans fil 2, et est désactivée lorsque le téléphone mobile 3 est retiré de la surface d'accueil. Ainsi, lorsque l'utilisateur pose son téléphone mobile 3 sur la surface d'accueil, le Wi-Fi est activé et est disponible dans l'habitation de l'utilisateur. Lorsque l'utilisateur retire son téléphone mobile 3 de la surface d'accueil, le Wi-Fi est désactivé.

Bien sûr, la mise en œuvre de l'invention peut être plus complexe. Il est notamment possible d'avoir plusieurs premières fonctions prédéfinies et plusieurs deuxièmes fonctions prédéfinies. Il est aussi possible que le positionnement du téléphone mobile 3 sur la surface d'accueil ait pour résultat de désactiver et non d'activer des premières fonctions prédéfinies, et que le retrait du téléphone mobile 3 de la surface d'accueil ait pour résultat d'activer et non de désactiver des deuxièmes fonctions prédéfinies.

Les premières fonctions prédéfinies et les deuxièmes fonctions prédéfinies sont réalisées par la passerelle résidentielle 1 et non par le téléphone mobile 3.

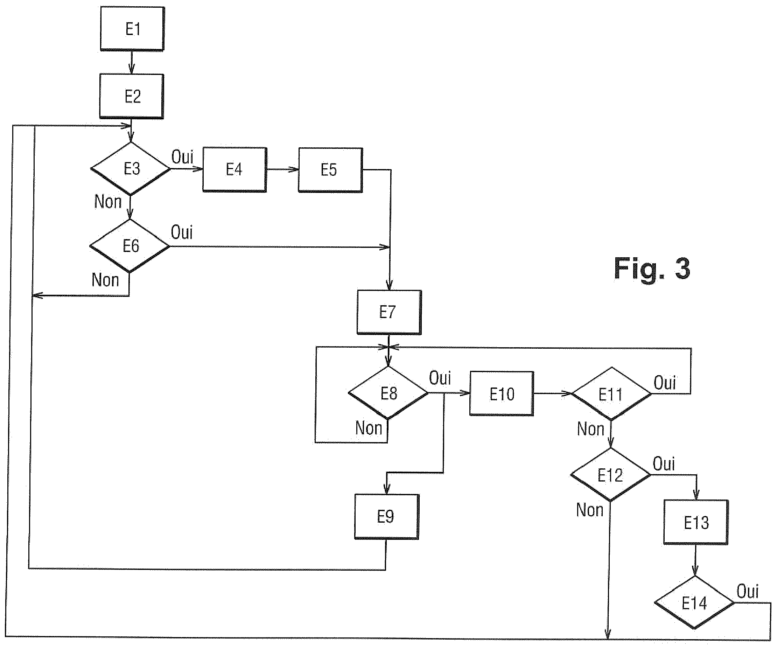

On décrit maintenant plus en détail, en référence à la figure 3, la mise en oeuvre du procédé d'activation selon l'invention.

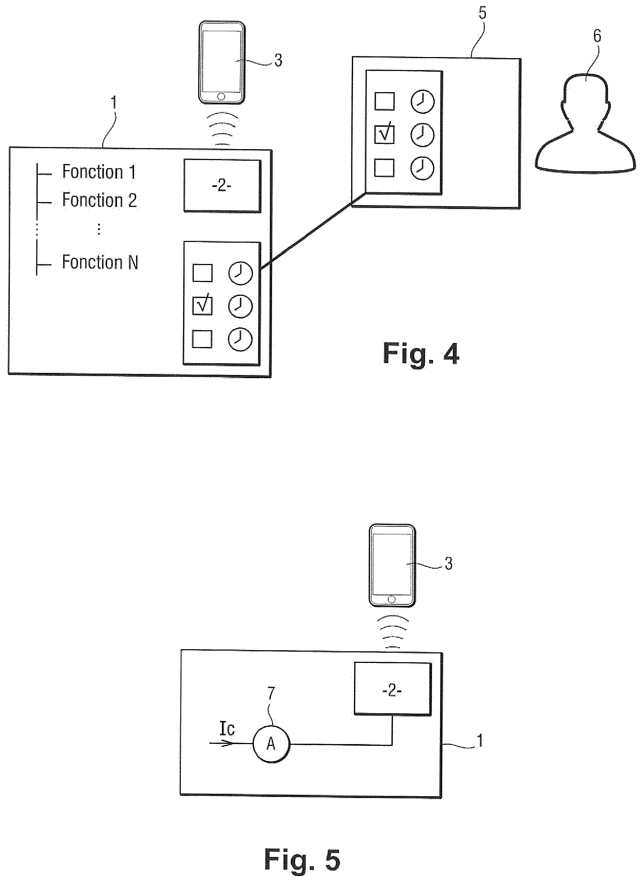

Le procédé d'activation comporte tout d'abord une étape préliminaire de programmation de fonctions (étape E1). Cette étape est aussi visible sur la figure 4.

La programmation de fonctions peut se faire via une application dédiée ou via un portail web 5. L'utilisateur 6 réalise la programmation de fonctions en cochant les fonctions à programmer depuis une liste des fonctions disponibles sur la passerelle résidentielle 1.

Ici, la passerelle résidentielle 1 est capable de mettre en œuvre une pluralité de fonctions prédéfinies, qui sont classées dans une première liste de premières fonctions prédéfinies et dans une deuxième liste de deuxièmes fonctions prédéfinies.

La programmation de fonctions consiste à sélectionner, dans la première liste de premières fonctions prédéfinies, une ou des premières fonctions prédéfinies qui seront activées ou désactivées suite à la détection qu'un téléphone mobile 3 vient d'être positionné sur la surface d'accueil du dispositif de charge sans fil 2, et à définir, pour chaque première fonction prédéfinie, si elle sera activée ou bien désactivée. La programmation de fonctions consiste aussi à sélectionner, dans la deuxième liste de fonctions prédéfinies, une ou des deuxièmes fonctions prédéfinies qui seront activées ou désactivées suite à la détection que le téléphone mobile 3 vient d'être éloigné de la surface d'accueil, et à définir, pour chaque deuxième fonction prédéfinie, si elle sera activée ou bien désactivée.

On peut aussi prévoir que, au moment où le téléphone mobile 3 est posé sur la surface d'accueil, la passerelle résidentielle 1 identifie le téléphone mobile 3 et sélectionne la ou les premières fonctions prédéfinies parmi les premières fonctions prédéfinies de la première liste et/ou sélectionne la ou les deuxièmes fonctions prédéfinies parmi les deuxièmes fonctions prédéfinies de la deuxième liste en fonction de cette identification.

Si, dans le flux d'informations échangées entre le téléphone mobile 3 et le dispositif de charge sans fil 2, le téléphone mobile 3 diffuse un identifiant (par exemple un identifiant unique, une adresse MAC, un numéro de série, etc.), alors on pourra conditionner le déclenchement de fonctions en fonction de cet identifiant.

Ainsi, par exemple, le positionnement sur la surface d'accueil d'un téléphone mobile n°1 pourrait activer une première fonction prédéfinie n°1 et désactiver une première fonction prédéfinie n°2, alors que le positionnement sur la surface d'accueil d'un téléphone mobile n°2 pourrait activer seulement la première fonction prédéfinie n°1.

Par exemple, le positionnement sur la surface d'accueil du téléphone mobile du chef de famille activera le réseau Wi-Fi (fonction n°1) et désactivera le contrôle parental de la passerelle résidentielle (fonction n°2), alors que le positionnement sur la surface d'accueil du téléphone mobile d'une autre personne activera le réseau Wi-Fi (fonction n°1) pour les invités.

La programmation de fonctions peut aussi consister à définir, pour chaque première fonction prédéfinie (ou seulement pour une ou pour certaines des premières fonctions prédéfinies), un premier délai prédéterminé. La première fonction prédéfinie n'est activée ou désactivée qu'après que le premier délai prédéterminé soit écoulé suite à la détection que le téléphone mobile 3 vient d'être positionné sur la surface d'accueil.

La programmation de fonctions peut aussi consister à définir, pour chaque première fonction prédéfinie (ou seulement pour une ou pour certaines des premières fonctions prédéfinies), un premier horaire. Suite à la détection que le téléphone mobile 3 vient d'être positionné sur la surface d'accueil, la première fonction prédéfinie n'est activée ou désactivée qu'au premier horaire.

Bien sûr, la programmation de fonctions peut aussi consister à définir, pour chaque deuxième fonction prédéfinie (ou seulement pour une ou pour certaines des deuxièmes fonctions prédéfinies), un deuxième délai prédéterminé et un deuxième horaire.

Par exemple, le Wi-Fi peut être désactivé 20mn après la détection que le téléphone mobile 3 a été retiré de la surface d'accueil.

Suite à cette programmation de fonctions, l'équipement hôte se trouve dans un état initial (étape E2).

Puis, le procédé d'activation comporte l'étape de détecter qu'un téléphone mobile 3 vient d'être positionné sur la surface d'accueil.

Si le téléphone mobile 3 est capable de communiquer avec la passerelle résidentielle 1 ou avec le dispositif de charge sans fil 2, la détection est réalisée par la passerelle résidentielle 1 à partir de la réception de données prédéfinies susceptibles d'être transmises à la passerelle résidentielle 1 ou au dispositif de charge sans fil 2 par le téléphone mobile 3 (étape E3).

Si le dispositif de charge sans fil 2 utilise le standard *Qi,* le téléphone mobile 3 lui transmet au cours de la recharge des données prédéfinies permettant de gérer la recharge. Les données prédéfinies sont définies par le standard Qi. Les données prédéfinies comprennent par exemple une évaluation la force du signal reçu par le téléphone mobile 3 (pour indiquer sa présence), un identifiant, un niveau de puissance requis pour sa recharge, des données de contrôle, etc. Le dispositif de charge sans fil 2 adapte la puissance transmise en fonction de ces données prédéfinies.

Ainsi, la réception de ces données prédéfinies permet à la passerelle résidentielle 1 de détecter la présence sur la surface d'accueil du téléphone mobile 3.

Les données prédéfinies sont traitées (étape E4) et permettent la gestion de la charge (étape E5).

Si le téléphone mobile 3 n'est pas capable de communiquer avec la passerelle résidentielle 1 ou avec le dispositif de charge sans fil 2, la passerelle résidentielle 1 détecte que le téléphone mobile 3 vient d'être positionné sur la surface d'accueil lorsqu'un courant de charge tiré par le dispositif de charge sans fil 2 pour réaliser la recharge devient supérieur à un premier seuil de courant prédéfini (étape E6). En référence à la figure 5, le courant de charge Ic, utilisé pour recharger le téléphone mobile 3, est mesuré grâce à un capteur de courant 7 relié au dispositif de charge sans fil 2 et intégré dans la passerelle résidentielle 1.

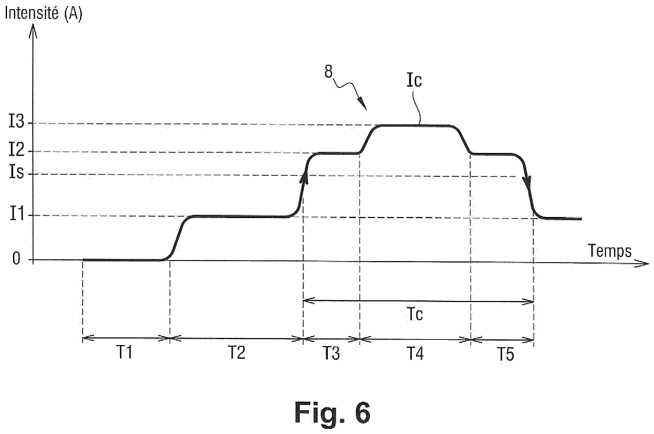

On voit sur la figure 6 que la courbe 8 du courant de charge Ic en fonction du temps présente typiquement quatre paliers. Lorsque le dispositif de charge sans fil 2 n'est pas connecté ou est désactivé pendant une durée T1, le courant de charge Ic est nul. Lorsqu'un dispositif de charge sans fil 2 est connecté, le courant de charge Ic augmente et atteint un seuil I1. Le courant de charge Ic reste égal à I1 pendant la durée T2. Lorsqu'un téléphone mobile 3, compatible pour sa recharge avec le dispositif de charge sans fil 2, est posé sur la surface d'accueil pour être chargé, le courant de charge Ic augmente et atteint un seuil I2. Le courant de charge reste égal à I2 pendant la durée T3. Puis, le courant de charge Ic augmente encore et atteint un seuil I3. Le courant de charge le reste égal à I3 pendant la durée T4. Après la durée T4, le courant de charge Ic diminue et atteint à nouveau le seuil I2. Le courant de charge Ic reste égal à I2 pendant la durée T5. Enfin, lorsque le téléphone mobile 3 est retiré de la surface d'accueil, le courant de charge diminue jusqu'au seuil Il.

La durée de la charge Tc est telle que :

$$Tc = T3 + T4 + T5.$$

Le premier seuil prédéfini, permettant de détecter la présence du téléphone mobile 3, est ici choisi égal à Is, qui est compris entre I1 et I2.

Par exemple, on connaît une base de charge sans fil qui consomme à vide entre 0, 024A et 0, 0044A en USB. La même base, lors de la charge d'un téléphone mobile, peut consommer jusqu'à 0,750A. On pourrait dans cette configuration avoir Is = 0,300A.

L'utilisation de ce seuil permet d'éviter une fausse détection de présence (ou une fausse détection d'absence) du téléphone mobile 3 sur la surface d'accueil.

Lorsque la passerelle résidentielle 1 a détecté que le téléphone mobile 3 vient d'être positionné sur la surface d'accueil du dispositif de charge sans fil 2, la ou les premières fonctions prédéfinies sont activées ou désactivées, éventuellement après des premiers délais, éventuellement à des instants correspondant aux premiers horaires, et éventuellement en fonction de l'identification du téléphone mobile 3 (étape E7).

Une fois que les premières fonctions prédéfinies ont été activées, le procédé d'activation est en attente, jusqu'à ce que la passerelle résidentielle 1 détecte que le téléphone mobile 3 vient d'être éloigné de la surface d'accueil.

Lorsque la passerelle résidentielle 1 détecte que le téléphone mobile 3 vient d'être éloigné de la surface d'accueil (étape E8), la ou les deuxièmes fonctions prédéfinies sont activées ou désactivées, éventuellement avec des deuxièmes délais, éventuellement à des instants correspondant aux deuxièmes horaires, et éventuellement en fonction de l'identification du téléphone mobile 3 (étape E9) .

Si le téléphone mobile 3 est capable de communiquer avec la passerelle résidentielle 1 ou avec le dispositif de charge sans fil 2, la détection du retrait du téléphone mobile 3 peut être réalisée à partir de la réception des données prédéfinies et, par exemple, à partir d'une évaluation très faible de la force du signal reçu par le téléphone mobile 3. La détection peut aussi être réalisée à partir de l'absence de réception de données prédéfinies : si la passerelle résidentielle 1 ne peut plus communiquer avec le téléphone mobile 3, elle en déduit que celui-ci a été retiré de la surface d'accueil.

Si le téléphone mobile 3 n'est pas capable de communiquer avec la passerelle résidentielle 1 ou avec le dispositif de charge sans fil 2, la passerelle résidentielle 1 détecte que le téléphone mobile 3 vient d'être retiré de la surface d'accueil lorsque le courant de charge le tiré par le dispositif de charge sans fil 2 devient inférieur à un deuxième seuil de courant prédéfini.

Ici, le deuxième seuil de courant prédéfini est égal au premier seuil de courant prédéfini (mais cela pourrait ne pas être le cas) : le deuxième seuil de courant prédéfini est égal à Is.

On note que, au moment de l'étape E8, suite à la détection que le téléphone mobile 3 vient d'être éloigné de la surface d'accueil, on peut prévoir que la passerelle résidentielle 1 produise ou acquière des données de géolocalisation du téléphone mobile 3 (étape E10).

La passerelle résidentielle 1 peut elle-même produire ou contribuer à produire les données de géolocalisation. Les données peuvent dans ce cas par exemple être produites par triangulation *Bluetooth*. La géolocalisation peut, plus simplement, consister à vérifier que le téléphone mobile 3 est toujours connecté au réseau Wi-Fi mis en œuvre par la passerelle résidentielle 1.

Les données de géolocalisation peuvent aussi être produites par le téléphone mobile 3 lui-même puis transmises à la passerelle résidentielle 1. Ces données de géolocalisation peuvent dans ce cas être produites par exemple grâce à un récepteur GPS intégré dans le téléphone mobile 3.

La passerelle résidentielle 1 va alors activer ou désactiver la ou les deuxièmes fonctions prédéfinies en fonction d'une position du téléphone mobile 3.

La passerelle résidentielle 1 va par exemple déterminer si le téléphone mobile 3 se trouve dans une zone prédéfinie, par exemple au domicile de l'utilisateur (étape E11). Si c'est le cas, on peut prévoir qu'une deuxième fonction prédéfinie n'est pas désactivée. Par exemple, le WI-Fi ne sera pas désactivé tant que le téléphone mobile 3 n'a pas quitté l'habitation.

On peut aussi prévoir que le réseau Wi-Fi n'est pas désactivé tant que le téléphone mobile 3 n'a pas quitté la zone de couverture du réseau Wi-Fi.

La passerelle résidentielle 1 peut aussi transmettre une notification au téléphone mobile 3 dans le but d'interroger l'utilisateur du téléphone mobile 3 pour déterminer si l'utilisateur souhaite activer ou désactiver la ou les deuxièmes fonctions prédéfinies. Dans le cas où l'utilisateur aurait accepté cette option, une notification *push* peut être envoyée au téléphone mobile 3 pour demander la consigne de l'utilisateur. Le *push* ainsi reçu peut réveiller une application sur le téléphone mobile 3 qui interroge l'utilisateur sur ses intentions (c'est à dire d'activer ou de désactiver la ou les deuxièmes fonctions prédéfinies, ou bien de ne rien faire). L'utilisateur transmet ses intentions manuellement, par exemple par une pression sur une zone déterminée de l'écran tactile du téléphone mobile 3. L'absence de réponse sous un délai configurable pourrait engager le comportement par défaut (par exemple une désactivation d'une deuxième fonction prédéfinie).

Ainsi, suite à l'étape E11, la passerelle résidentielle vérifie que l'utilisateur a bien autorisé cette méthode de validation manuelle (étape E12). Si c'est le cas, la notification *push* est envoyé au téléphone mobile 3 (étape E13), et l'utilisateur doit confirmer ou non qu'il souhaite désactiver le Wi-Fi (étape E14).

Bien entendu, l'invention n'est pas limitée au mode de réalisation décrit mais englobe toute variante entrant dans le champ de l'invention telle que définie par les revendications.

On a décrit ici que l'équipement hôte est une passerelle résidentielle, mais il pourrait s'agir de tout type d'équipement susceptible d'intégrer ou d'être relié à un dispositif de charge sans fil, et par exemple un boîtier décodeur, un véhicule connecté, etc.

On a décrit aussi que l'équipement mobile est un téléphone mobile, mais il pourrait s'agir de tout type d'équipement mobile susceptible d'être rechargé par un dispositif de charge sans fil, et par exemple une tablette, une montre connectée, etc.

La fonction principalement évoquée ici est une fonction de point d'accès à un réseau Wi-Fi. Bien sûr, tout type de fonction peut être envisagé. Toutes les fonctions pouvant être mises en oeuvre par un équipement hôte susceptible d'être relié à un dispositif de charge sans fil pourraient être activées ou désactivées selon le procédé d'activation de l'invention : activation ou désactivation d'une alarme protégeant le domicile de l'utilisateur (ou d'un autre type d'alarme), d'une vidéosurveillance, diffusion de musique ou de tout type de contenu multimédia, etc.

## Revendications

1. Procédé d'activation de fonctions prédéfinies (f1,..., fN), mis en œuvre dans un équipement hôte (1) intégrant ou relié à un dispositif de charge sans fil (2), et comprenant les étapes de :

> - détecter qu'un équipement mobile (3) vient d'être positionné sur une surface d'accueil du dispositif de charge sans fil (2) pour être rechargé ;
> - suite à la détection que l'équipement mobile (3) vient d'être positionné sur la surface d'accueil, activer ou désactiver au moins une première fonction prédéfinie réalisée par l'équipement hôte, en plus de la recharge de l'équipement mobile (3) ;

- puis, détecter que l'équipement mobile (3) vient d'être éloigné de la surface d'accueil ;

- suite à la détection que l'équipement mobile (3) vient d'être éloigné de la surface d'accueil, activer ou désactiver au moins une deuxième fonction prédéfinie réalisée par l'équipement hôte ;

la première fonction prédéfinie appartenant à une première liste de fonctions prédéfinies et/ou la deuxième fonction prédéfinie appartenant à une deuxième liste de fonctions prédéfinies,

le procédé d'activation comprenant en outre l'étape de sélectionner la première fonction prédéfinie parmi les premières fonctions prédéfinies de la première liste, et de définir si la première fonction prédéfinie est activée ou désactivée suite à la détection que l'équipement mobile vient d'être positionné sur la surface d'accueil ;

et/ou de sélectionner la deuxième fonction prédéfinie parmi les deuxièmes fonctions prédéfinies de la deuxième liste, et de définir si la deuxième fonction prédéfinie est activée ou désactivée suite à la détection que l'équipement mobile vient d'être éloigné de la surface d'accueil.

2. Procédé d'activation selon la revendication 1, dans lequel la première fonction prédéfinie et la deuxième fonction prédéfinie sont une même fonction prédéfinie, et dans lequel, suite à la détection que l'équipement mobile (3) vient d'être positionné sur la surface d'accueil, la fonction prédéfinie est activée, et, suite à la détection que l'équipement mobile vient d'être éloigné de la surface d'accueil, la fonction prédéfinie est désactivée.

3. Procédé d'activation selon la revendication 2, dans lequel la fonction prédéfinie est une fonction de point d'accès à un réseau Wi-Fi.

4. Procédé d'activation selon l'une des revendications précédentes, comprenant en outre l'étape d'identifier l'équipement mobile (3), et de sélectionner la première fonction prédéfinie parmi les premières fonctions prédéfinies de la première liste et/ou de sélectionner la deuxième fonction prédéfinie parmi les deuxièmes fonctions prédéfinies de la deuxième liste en fonction de cette identification.

5. Procédé d'activation selon la revendication 1, dans lequel l'équipement hôte (1) détecte que l'équipement mobile (3) vient d'être positionné sur la surface d'accueil et que l'équipement mobile vient d'être éloigné de la surface d'accueil à partir de la réception ou de l'absence de réception de données prédéfinies susceptibles d'être transmises à l'équipement hôte (1) ou au dispositif de charge sans fil (2) par l'équipement mobile (3).

6. Procédé d'activation selon la revendication 5, dans lequel les données prédéfinies sont des données échangées lors de la recharge de l'équipement mobile, qui est réalisée selon un standard définissant lesdites données prédéfinies.

7. Procédé d'activation selon la revendication 1, dans lequel l'équipement hôte (1) détecte que l'équipement mobile (3) vient d'être positionné sur la surface d'accueil lorsqu'un courant de charge (Ic) tiré par le dispositif de charge sans fil (2) devient supérieur à un premier seuil de courant prédéfini (Is), et dans lequel l'équipement hôte détecte que l'équipement mobile vient d'être éloigné de la surface d'accueil lorsque le courant de charge (Ic) devient inférieur à un deuxième seuil de courant prédéfini (Is).

8. Procédé d'activation selon l'une des revendications précédentes, dans lequel, suite à la détection que l'équipement mobile (3) vient d'être positionné sur la surface d'accueil, la première fonction prédéfinie est activée ou désactivée après un premier délai prédéterminé, et dans lequel, suite à la détection que l'équipement mobile vient d'être éloigné de la surface d'accueil, la deuxième fonction prédéfinie est activée ou désactivée après un deuxième délai prédéterminé.

9. Procédé d'activation selon l'une des revendications précédentes, comprenant en outre l'étape, suite à la détection que l'équipement mobile (3) vient d'être éloigné de la surface d'accueil, de produire ou d'acquérir des données de géolocalisation de l'équipement mobile (3) et d'activer ou de désactiver la deuxième fonction prédéfinie en fonction d'une position de l'équipement mobile.

10. Procédé d'activation selon l'une des revendications précédentes, comprenant en outre l'étape, suite à la détection que l'équipement mobile (3) vient d'être éloigné de la surface d'accueil, de transmettre une notification à l'équipement mobile (3) pour interroger un utilisateur de l'équipement mobile pour déterminer si l'utilisateur souhaite ou non activer ou désactiver la deuxième fonction prédéfinie.

11. Equipement hôte dans lequel est mis en œuvre le procédé d'activation selon l'une des revendications précédentes.

12. Equipement hôte selon la revendication précédente, l'équipement hôte étant une passerelle résidentielle ou un boîtier décodeur ou un véhicule connecté.

13. Programme d'ordinateur comprenant des instructions pour mettre en oeuvre, par un composant de traitement d'un équipement hôte, le procédé d'activation selon l'une des revendications 1 à 10.

14. Moyens de stockage, **caractérisés en ce qu'**ils stockent un programme d'ordinateur comprenant des instructions pour mettre en oeuvre, par un composant de traitement d'un équipement hôte, le procédé d'activation selon l'une des revendications 1 à 10.

**Patentansprüche**

1. Aktivierungsverfahren zur Aktivierung vordefinierter Funktionen (f1, ..., fN), das in einem Hostgerät (1) implementiert wird, das eine drahtlose Ladevorrichtung (2) integriert oder das mit einer drahtlosen Ladevorrichtung (2) verbunden ist, und umfassend die Schritte:

   - Detektieren, dass ein mobiles Gerät (3) soeben auf einer Aufnahmefläche der drahtlosen Ladevorrichtung (2) positioniert wurde, um wiederaufgeladen zu werden;
   - nach der Detektion, dass das mobile Gerät (3) soeben auf der Aufnahmefläche positioniert wurde, Aktivieren oder Deaktivieren mindestens einer vordefinierten ersten Funktion, die von dem Hostgerät ausgeführt wird, zusätzlich zum Wiederaufladen des mobilen Geräts (3);
   - daraufhin Detektieren, dass das mobile Gerät (3) soeben von der Aufnahmefläche entfernt wurde;
   - nach der Detektion, dass das mobile Gerät (3) soeben von der Aufnahmefläche entfernt wurde, Aktivieren oder Deaktivieren mindestens einer vordefinierten zweiten Funktion, die von dem Hostgerät ausgeführt wird;
   wobei die vordefinierte erste Funktion zu einer ersten Liste von vordefinierten Funktionen gehört und/oder die vordefinierte zweite Funktion zu einer zweiten Liste von vordefinierten Funktionen gehört,
   wobei das Aktivierungsverfahren ferner den Schritt des Auswählens der vordefinierten ersten Funktion unter den vordefinierten ersten Funktionen der ersten Liste umfasst, und des Definierens, ob die vordefinierte erste Funktion nach der Detektion, dass das mobile Gerät soeben auf der Aufnahmefläche positioniert wurde, aktiviert oder deaktiviert ist;
   und/oder des Auswählens der vordefinierten zweiten Funktion unter den vordefinierten zweiten Funktionen der zweiten Liste umfasst, und des Definierens, ob die vordefinierte zweite Funktion nach der Detektion, dass das mobile Gerät soeben von der Aufnahmefläche entfernt wurde, aktiviert oder deaktiviert ist.

2. Aktivierungsverfahren nach Anspruch 1, bei dem die vordefinierte erste Funktion und die vordefinierte zweite Funktion eine selbe vordefinierte Funktion sind, und bei dem, nach der Detektion, dass das mobile Gerät (3) soeben auf der Aufnahmefläche positioniert wurde, die vordefinierte Funktion aktiviert wird, und nach der Detektion, dass das mobile Gerät soeben von der Aufnahmefläche entfernt wurde, die vordefinierte Funktion deaktiviert wird.

3. Aktivierungsverfahren nach Anspruch 2, bei dem die vordefinierte Funktion eine Zugangspunktfunktion für den Zugang zu einem Wi-Fi-Netzwerk ist.

4. Aktivierungsverfahren nach einem der vorhergehenden Ansprüche, ferner umfassend den Schritt des Identifizierens des mobilen Geräts (3) und des Auswählens der vordefinierten ersten Funktion unter den vordefinierten ersten Funktionen der ersten Liste und/oder des Auswählens der vordefinierten zweiten Funktion unter den vordefinierten zweiten Funktionen der zweiten Liste in Abhängigkeit von dieser Identifizierung.

5. Aktivierungsverfahren nach Anspruch 1, bei dem das Hostgerät (1) detektiert, dass das mobile Gerät (3) soeben auf der Aufnahmefläche positioniert wurde und dass das mobile Gerät soeben von der Aufnahmefläche entfernt wurde, anhand des Empfangs oder des Fehlens des Empfangs von vordefinierten Daten, die an das Hostgerät (1) oder die drahtlose Ladevorrichtung (2) durch das mobile Gerät (3) übertragen werden können.

6. Aktivierungsverfahren nach Anspruch 5, bei dem die vordefinierten Daten Daten sind, die während des Wiederaufladens des mobilen Geräts ausgetauscht werden, das gemäß einem Standard erfolgt, der die genannten vordefinierten Daten definiert.

7. Aktivierungsverfahren nach Anspruch 1, bei dem das Hostgerät (1) detektiert, dass das mobile Gerät (3) soeben auf der Aufnahmefläche positioniert wurde, wenn ein Ladestrom (Ic), der von der drahtlosen Ladevorrichtung (2) gezogen wird, größer als ein vordefinierter erster Stromschwellenwert (Is) wird, und bei dem das Hostgerät detektiert, dass das mobile Gerät soeben von der Aufnahmefläche entfernt wurde, wenn der Ladestrom (Ic) kleiner als ein vordefinierter zweiter Stromschwellenwert (Is) wird.

8. Aktivierungsverfahren nach einem der vorhergehenden Ansprüche, bei dem nach der Detektion, dass das mobile Gerät (3) soeben auf der Aufnahmefläche positioniert wurde, die vordefinierte erste Funktion nach einer vorbestimmten ersten Verzögerung aktiviert oder deaktiviert wird, und bei dem nach der Detektion, dass das mobile Gerät soeben von der Aufnahmefläche entfernt wurde, die vordefinierte zweite Funktion nach einer vorbestimmten zweiten Verzögerung aktiviert oder deaktiviert wird.

9. Aktivierungsverfahren nach einem der vorhergehenden Ansprüche, ferner umfassend den Schritt, nach der Detektion, dass das mobile Gerät (3) soeben von der Aufnahmefläche entfernt wurde, des Erzeugens oder Erfassens von Daten zur Geolokalisierung des mobilen Geräts (3) und des Aktivierens oder Deaktivierens der vordefinierten zweiten Funktion in Abhängigkeit einer Position des mobilen Geräts.

10. Aktivierungsverfahren nach einem der vorhergehenden Ansprüche, ferner umfassend den Schritt, nach der Detektion, dass das mobile Gerät (3) soeben von der Aufnahmevorrichtung entfernt wurde, des Übertragens einer Benachrichtigung an das mobile Gerät (3), um einen Benutzer des mobilen Geräts zu befragen, um zu bestimmen, ob der Benutzer die vordefinierte zweite Funktion aktivieren oder deaktivieren will oder nicht.

11. Hostgerät, bei dem das Aktivierungsverfahren nach einem der vorhergehenden Ansprüche implementiert wird.

12. Hostgerät nach dem vorhergehenden Anspruch, wobei das Hostgerät ein Residential Gateway oder eine Set-Top-Box oder ein verbundenes Fahrzeug ist.

13. Computerprogramm, umfassend Anweisungen zum Durchführen des Aktivierungsverfahrens nach einem der Ansprüche 1 bis 10 durch eine Verarbeitungskomponente eines Hostgeräts.

14. Speichermittel, **dadurch gekennzeichnet, dass** sie ein Computerprogramm speichern, das Anweisungen zum Durchführen des Aktivierungsverfahrens nach einem der Ansprüche 1 bis 10 durch eine Verarbeitungskomponente eines Hostgeräts umfasst.

**Claims**

1. Method for activating predefined functions (f1,..., fN), implemented in a host appliance (1) integrating or linked to a wireless charging device (2), and comprising the steps of:

   - detecting that a mobile appliance (3) has just been positioned on a reception surface of the wireless charging device (2) in order to be recharged;
   - following the detection that the mobile appliance (3) has just been positioned on the reception surface, activating or deactivating at least one predefined first function performed by the host appliance, in addition to recharging the mobile appliance (3);
   - then, detecting that the mobile appliance (3) has just been moved away from the reception surface;
   - following the detection that the mobile appliance (3) has just been moved away from the reception surface, activating or deactivating at least one predefined second function performed by the host appliance;

   the predefined first function belonging to a first list of predefined functions and/or the predefined second function belonging to a second list of predefined functions,

   the activation method furthermore comprising the step of selecting the predefined first function from among the predefined first functions in the first list, and of determining whether the predefined first function is activated or deactivated following the detection that the mobile appliance (3) has just been moved away from the reception surface;

   and/or of selecting the predefined second function from among the predefined second functions in the second list, and determining whether the predefined second function is activated or deactivated following the detection that the mobile appliance (3) has just been moved away from the reception surface.

2. Activation method according to Claim 1, wherein the predefined first function and the predefined second function are one and the same predefined function, and wherein, following the detection that the mobile appliance (3) has just been positioned on the reception surface, the predefined function is activated and, following the detection that the mobile appliance has just been moved away from the reception surface, the predefined function is deactivated.

3. Activation method according to Claim 2, wherein the predefined function is an access point function for accessing a Wi-Fi network.

4. Activation method according to one of the preceding claims, further comprising the step of identifying the mobile appliance (3), and of selecting the predefined first function from among the predefined first functions in the first list and/or of selecting the predefined second function from among the predefined second functions in the second list on the basis of this identification.

**5.** Activation method according to Claim 1, wherein the host appliance (1) detects that the mobile appliance (3) has just been positioned on the reception surface and that the mobile appliance has just been moved away from the reception surface based on the reception or the lack of reception of predefined data able to be transmitted to the host appliance (1) or to the wireless charging device (2) by the mobile appliance (3).

**6.** Activation method according to Claim 5, wherein the predefined data are data exchanged during recharging of the mobile appliance, which is performed in accordance with a standard defining said predefined data.

**7.** Activation method according to Claim 1, wherein the host appliance (1) detects that the mobile appliance (3) has just been positioned on the reception surface when a charging current (Ic) drawn by the wireless charging device (2) becomes greater than a predefined first current threshold (Is), and wherein the host appliance detects that the mobile appliance has just been moved away from the reception surface when the charging current (Ic) becomes lower than a predefined second current threshold (Is).

**8.** Activation method according to one of the preceding claims, wherein, following the detection that the mobile appliance (3) has just been positioned on the reception surface, the predefined first function is activated or deactivated after a predetermined first delay, and wherein, following the detection that the mobile appliance has just been moved away from the reception surface, the predefined second function is activated or deactivated after a predetermined second delay.

**9.** Activation method according to one of the preceding claims, furthermore comprising the step, following the detection that the mobile appliance (3) has just been moved away from the reception surface, of producing or acquiring geolocation data for the mobile appliance (3) and of activating or deactivating the predefined second function on the basis of a position of the mobile appliance.

**10.** Activation method according to one of the preceding claims, furthermore comprising the step, following the detection that the mobile appliance (3) has just been moved away from the reception surface, of transmitting a notification to the mobile appliance (3) in order to interrogate a user of the mobile appliance in order to determine whether or not the user wishes to activate or deactivate the predefined second function.

**11.** Host appliance in which the activation method according to one of the preceding claims is implemented.

**12.** Host appliance according to the preceding claim, the host appliance being a home gateway or a decoder module or a connected vehicle.

**13.** Computer program comprising instructions for a processing component of a host appliance to implement the activation method according to one of Claims 1 to 10.

**14.** Storage means, **characterized in that** they store a computer program comprising instructions for a processing component of a host appliance to implement the activation method according to one of Claims 1 to 10.

Fonction 1

Fonction 2

⋮

Fonction N

-2-

3

1

**Fig. 1**

Fonction 1

Fonction 2

⋮

Fonction N

1

4

-2-

3

**Fig. 2**

Fig. 3

Fonction 1
Fonction 2
⋮
Fonction N

-2-

**Fig. 4**

Ic

A

-2-

**Fig. 5**

Fig. 6

**RÉFÉRENCES CITÉES DANS LA DESCRIPTION**

**Documents brevets cités dans la description**

- KR 20180045703 A